# EUROPÄISCHE PATENTANMELDUNG

(11) **EP 2 818 444 A1**
(43) Veröffentlichungstag der Anmeldung: **31.12.2014**
(21) Anmeldenummer: 14169395.2
(22) Anmeldetag: 22.05.2014
(51) Int. Cl.: B66F 9/075, B60T 1/10, B60T 7/04, B60T 7/08

(54) **Mobile Arbeitsmaschine mit Bremsbetätigungsvorrichtung**

(30) Priorität: 25.06.2013 DE 102013106655
(71) Anmelder: STILL GmbH, 22113 Hamburg (DE)
(72) Erfinder: Tügel, Caspar, 20253 Hamburg (DE); Kohl, Tobias, 20257 Hamburg (DE); Wünsch, Alexander, 21029 Hamburg (DE)
(74) Vertreter: Geirhos, Johann

(57) **Zusammenfassung**

Bei einer mobilen Arbeitsmaschine mit einer mechanischen Bremse sowie einer elektrischen Zusatzbremse, die über eine Bremsbetätigungsvorrichtung (9) bedient werden, wobei eine Bremskraft und/oder ein Bremssignal für die mechanische Bremse durch eine von einer Person ausgeübte Betätigungskraft erzeugt wird, erfassen Kraftsensormittel die auf eine Bedienfläche der Bremsbetätigungsvorrichtung (9) ausgeübte Betätigungskraft und wird durch ein von der Betätigungskraft abhängiges Steuersignal die elektrische Zusatzbremse angesteuert.

## Beschreibung

Die Erfindung betrifft eine mobile Arbeitsmaschine, insbesondere ein Flurförderzeug, mit einer mechanischen Bremse sowie einer elektrischen Zusatzbremse, die über eine Bremsbetätigungsvorrichtung bedient werden. Insbesondere betrifft die Erfindung eine mobile Arbeitsmaschine mit einer mechanischen Bremse sowie einer elektrischen Zusatzbremse, die über eine Bremsbetätigungsvorrichtung bedient werden, wobei eine Bremskraft und/oder ein Bremssignal für die mechanische Bremse durch eine von einer Person ausgeübte Betätigungskraft erzeugt wird.

Bekannt ist bei mobilen Arbeitsmaschinen, insbesondere Flurförderzeugen, die durch einen aufsitzenden Fahrer bedient werden, dass eine Fahrzeugbetriebsbremse durch eine Bremsbetätigungsvorrichtung bedient werden kann, die in der Mehrzahl der Fälle ein Bremspedal für eine Betätigung durch den Fuß ist, jedoch etwa auch ein Handhebel sein kann, der zugleich zur Fahrsteuerung dient. Beispiele für diese Flurförderzeuge sind Gegengewichtsgabelstapler, Schubmaststapler und Regalbediengeräte. Dabei wird die Bremskraft abhängig von einem mit zunehmender Betätigungskraft zurückgelegten Stellweg bzw. Pedalweg des Bremspedals geregelt. Sehr häufig ist, insbesondere bei durch elektrische Fahrmotoren angetriebenen Flurförderzeugen, eine elektrische Abbremsung vorgesehen. Bei der elektrischen Abbremsung wird abhängig von dem Pedalweg des Bremspedals neben der Abbremsung durch die mechanische Betriebsbremse elektrisch durch die Fahrmotoren gebremst. Die Zuschaltung der elektrischen Abbremsung geschieht dabei zumeist ebenfalls in Abhängigkeit des Stellwegs des Bremspedals und für die Messung des Pedalwegs kann beispielsweise ein Potentiometer zur Ermittlung eines Betätigungswinkels eines drehbaren Pedalhebels eingesetzt werden. Zu diesem Winkel proportional wird dann eine elektrische Bremskraft geregelt.

Nachteilig an diesem Stand der Technik ist, dass es aufgrund von beispielsweise Verschleiß an den Bremsen zu einem verlängerten Bremspedalweg und somit zu Ungenauigkeiten der Ansteuerung der elektrischen Bremse kommen kann. Dies erfordert dann ein Nachstellen der Arbeitspunkte der elektrischen Bremse gegenüber der mechanischen Bremse, beispielsweise im Rahmen der Wartung des Flurförderzeugs. Häufig wird die Bremskraft bei einem Flurförderzeug nach dem Stand der Technik von dem Bremspedal zu den Radbremsen mechanisch, eventuell über eine Hebelübersetzung, und insbesondere durch einen Seilzug oder hydraulisch übertragen. Daher ist es erforderlich, dass eine Bremsbetätigungsvorrichtung bzw. ein Bremspedal als elektronischer Wegaufnehmer nach einer Montage im Verhältnis zu dieser mechanischen Bremskraftübertragung eingestellt werden muss. Dies ist insbesondere im Rahmen der Produktion des Flurförderzeugs erforderlich, da es zu Steuerungen der Toleranzen bei den Komponenten der Bremse kommt. Auch hierbei kann es zu Ungenauigkeiten kommen, die sich auf das Zusammenspiel zwischen mechanischer Betriebsbremse und elektrische Abbremsung ungünstig auswirken. Eine optimale Abstimmung zwischen elektrischer und mechanischer Bremse ist dabei aufgrund von Toleranzen und Veränderungen zumeist nicht möglich.

Häufig erfolgt bei Flurförderzeugen mit elektrischem Antrieb und einer elektrischen Bremse eine Energierückspeisung in einen elektrischen Energiespeicher bei dem elektrischen Bremsen. Ein hieraus folgendes Ziel ist es, soweit wie möglich elektrisch zu bremsen, um möglichst viel Energie zurück zu speisen. Auch wird durch ein überwiegend elektrisches Bremsen der Verschleiß der mechanischen Bremse minimiert.

Hierzu wird die elektrische Bremse bereits vor der mechanischen Bremse aktiviert. Bei einer rein durch den Pedalweg gesteuerten Auslösung der elektrischen Bremse ist jedoch aufgrund der Auflösung der Sensoren meistens der erforderliche Pedalweg größer als beispielsweise das zur Verfügung stehende Lüftspiel der mechanischen Bremskraftübertragung der mechanischen Bremse. Daher wird ein zusätzlicher Pedalweg erforderlich, der aber ergonomisch unerwünscht ist.

Es wird auch angestrebt, den Übergang von elektrischer Abbremsung zu einer kombinierten Bremsung, bei der sowohl die elektrische Bremse, wie auch die mechanische Bremse arbeiten, möglichst kontinuierlich erfolgen zu lassen, so dass es nicht zu einer abrupten Änderung der Verzögerung im Verhältnis zur Pedalkraft kommt.

Es ist auch vorteilhaft, um unerwünschte Wechselwirkungen zwischen elektrischer Bremse und mechanischer Bremse zu vermeiden, dass die Fahrzeugsteuerung eine Information über den Betätigungszustand der mechanischen Bremse erhält.

Beispielsweise muss das elektrische Bremsmoment rechtzeitig vor dem Lösen der mechanischen Bremse abgebaut werden, um einen Ruck infolge von Energiespeichereffekten zu vermeiden. Eine solche Information ist jedoch aus dem bereits zuvor genannten Gründen ungenau, wodurch eine optimale Auslegung erschwert bzw. verhindert wird.

Neben einer Übertragung der Bremskraft auf mechanischem Wege, etwa über den bereits beschriebenen Seilzug oder eine hydraulische Kraftübertragung, ist es aus dem Stand der Technik auch bekannt, einen Bremspedalweg über einen Potentiometer, einen Linearwegsensor oder andere Sensoren, wie etwa Hall-Sensoren, als elektrisches Bremssignal zu erfassen. Die mechanische Bremse wird dann über elektrisch ansteuerbare Stellelemente, etwa hydraulische Ventile oder elektrische Aktuatoren, entsprechend dem Stellsignal des Bremspedalweges angesteuert. Um eine dem gewohnten Verhalten eines Bremspedals entsprechende Bedienung zu ermöglichen, wird dabei eine mit zunehmendem Bremspedalweg ansteigende Rückstellkraft durch ein Federelement erzeugt. Eine solche Pedalausführung ist auch bei Fahrpedalen und Pedalen für einen Kriechbetrieb bekannt. Insbesondere bei elektrisch angetriebenen Fahrzeugen wie auch Hybridfahrzeugen kommen solche Ausführungen zum Einsatz.

Nachteilig ist auch bei diesen Ausführungsformen von Pedalen, dass die Kombination aus einer elektrischen Abbremsung und einer mechanischen Abbremsung nicht optimal geschaltet werden kann.

Der vorliegenden Erfindung liegt daher die Aufgabe zugrunde, eine mobile Arbeitsmaschine, insbesondere ein Flurförderzeug, mit einer mechanischen Bremse sowie einer elektrischen Zusatzbremse, die über eine Bremsbetätigungsvorrichtung bedient werden, zur Verfügung zu stellen, bei dem die zuvor genannten Nachteile vermieden werden und das eine gute Dosierbarkeit der Bremse unabhängig von Verschleiß gewährleistet sowie leicht einzustellen ist.

Diese Aufgabe wird durch eine mobile Arbeitsmaschine mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß gewährleistet dadurch gelöst, dass bei einer mobilen Arbeitsmaschine mit einer mechanischen Bremse sowie einer elektrischen Zusatzbremse, die über eine Bremsbetätigungsvorrichtung bedient werden, wobei eine Bremskraft und/oder ein Bremssignal für die mechanische Bremse durch eine von einer Person ausgeübte Betätigungskraft erzeugt wird, Kraftsensormittel die auf eine Bedienfläche der Bremsbetätigungsvorrichtung ausgeübte Betätigungskraft erfassen und durch ein von der Betätigungskraft abhängiges Steuersignal die elektrische Zusatzbremse angesteuert wird.

Vorteilhaft wird dadurch sowohl bei der Produktion der mobilen Arbeitsmaschine wie auch durch den Verschleiß während des Betriebs der mobilen Arbeitsmaschine etwa im Rahmen der Wartung keine Einstellung der mechanischen Bremse gegenüber der elektrischen Bremse erforderlich. Bei der Betätigung der Bremsbetätigungsvorrichtung wird eine Bremskraft beispielsweise durch einen Seilzug, oder durch eine hydraulische Kraftübertragung für die mechanische Bremse erzeugt. Zusätzlich oder auch nur alternativ kann durch einen entsprechenden Sensor abhängig von dem Stellweg der Bremsbetätigungsvorrichtung, beispielsweise einem Fußpedal, ein Bremssignal erzeugt werden, mit dem die mechanische Bremse über elektrische Stellelemente angesteuert wird. Insbesondere bei direkter mechanischer Übertragung der Bremskraft steigt die auf die Bremsbetätigungsvorrichtung ausgeübte Kraft mit dem zunehmenden Stellweg an. Wenn nun durch die Kraftsensormittel die Betätigungskraft erfasst wird, so geschieht dies unabhängig von dem tatsächlichen Stellweg und somit immer in gleicher Art und Weise, ohne dass ein Einstellen erforderlich wird. Es wird eine Montage ohne Einstellung auf den Betätigungsweg bzw. ohne eine entsprechende Justierung möglich. Da die elektrische Zusatzbremse in stets gleicher Art und Weise zuverlässig geschaltet wird und zum Schalten der elektrischen Zusatzbremse kein Stellweg benötigt wird, kann die mechanische Bremse auch so ausgelegt werden, dass sich insgesamt ein geringerer Stellweg der Bremsbetätigungsvorrichtung ergibt, insbesondere ein geringerer Pedalweg im Falle eines Fußpedals. Die elektrische Abbremsung wird allein in Abhängigkeit der Betätigungskraft, etwa der Fußkraft bei einem Bremspedal, gesteuert. Optimal kann dabei der Beginn der Verzögerung bereits bei einer geringen Fußkraft von beispielsweise 10 bis 20 N Mindestkraft zur Vermeidung von unbeabsichtigter Betätigung durch Massenkräfte erfolgen. Eine Rückstellfeder für die Bremsbetätigungsvorrichtung bzw. das Bremspedal kann dabei so ausgelegt werden, dass die elektrische Bremsung vor einer Auslenkung der Bremsbetätigungsvorrichtung bzw. des Bremspedals erfolgt. Die beschriebene Bremsbetätigungsvorrichtung ermöglicht Verbesserungen der Ergonomie und eine modulare Einsatzweise bei einer Mehrzahl von Fahrzeugen, indem auf einen Betätigungsweg keine oder nur geringe Rücksicht genommen werden muss. Weiterhin vorteilhaft kann durch das erfassen einer sehr geringen Betätigungskraft und das entsprechende Steuersignal, die elektrische Zusatzbremse bereits vor der mechanischen Bremse bzw. zugleich mit der mechanischen Bremse in ihrer Bremswirkung einsetzen. Dies minimiert den Gesamtverschleiß der mechanischen Bremse und führt zu einer überwiegend elektrischen Abbremsung über die elektrische Zusatzbremse in der Mehrzahl der Fälle, die verschleißfrei ist. Auch kann dadurch die Betätigung der Bremsbetätigungsvorrichtung an sich erkannt und beispielsweise ein Bremslichtschalter geschaltet werden. Ebenso ist es möglich, eine sehr starke Bremsbetätigung durch das Steuersignal zu erfassen und hieran Funktionen einer Fahrzeugsteuerung zu koppeln. Es besteht etwa die Möglichkeit, das Erreichen einer maximalen Bremsleistung zu überprüfen, wenn die Bremsbetätigungsvorrichtung entsprechend stark betätigt wird. Auch kann ein Schalten von Beleuchtungselementen bzw. Signalfunktionen abhängig von der Betätigungskraft erfolgen, etwa ein blinkendes Licht bei einer Vollbremsung. Ebenso kann eine Auslösung von Sicherheitssystemen und Rückhaltesystemen erfolgen, beispielsweise eines Gurtstraffers bei einer Vollbremsung.

Durch das Steuersignal kann die Betätigungskraft kontinuierlich erfasst werden.

Dadurch kann ein gleichmäßigerer Aufbau der Bremskraft auch bei der elektrischen Zusatzbremse erreicht werden, abhängig von der kontinuierlich ansteigenden Betätigungskraft.

In einer weiteren Ausgestaltung der Erfindung werden die Bremskraft und/oder das Bremssignal über einen Stellweg gegen eine rückstellende Kraft erzeugt.

Eine solche rückstellende Kraft wird im Regelfall schon bei einer mechanischen Übertragung der Bremskraft, beispielsweise durch einen Seilzug oder über eine Bremshydraulik, von der mechanischen Bremse selbst erzeugt. Zusätzlich erfolgt im Regelfall noch eine rückstellende Kraft durch eine Feder. Insbesondere, wenn durch die Bremsbetätigungsvorrichtung nur ein Bremssignal für die mechanische Bremse erzeugt wird, kann durch diese Ausführungsform ein Betriebsverhalten in gewohnter Weise erzeugt werden.

Die Bremsbetätigungsvorrichtung kann ein Fußpedal und die Bedienfläche eine Pedalplatte sein.

Diese Ausführung wirkt sich besonders vorteilhaft bei mobilen Arbeitsmaschinen aus, insbesondere Flurförderzeugen, die von einer mitfahrenden Person bedient werden. Im Regelfall steht dann für einen Fahrer ein Fahrersitz zur Verfügung, bei dem eine Betätigung der Bremse über ein Fußpedal erfolgt.

In einer vorteilhaften Weiterbildung der Erfindung ist die Pedalplatte an einem Pedalarm angeordnet und bestehen die Kraftsensormittel aus mindestens einem Dehnmesstreifen, der die Betätigungskraft über die Verformung des Pedalarms erfasst.

Dadurch lässt sich auf einfache und kostengünstige Weise die Betätigungskraft erfassen.

Es kann je auf der Ober- und der Unterseite des Pedalarms ein Dehnmessstreifen angeordnet sein.

Vorteilhaft ergibt sich dadurch eine genauere Erfassung der elastischen Verformung des Pedalarms entsprechend der Betätigungskraft, da somit ein Dehnmessstreifen sowohl unten in der Druckzone wie auch oben in der Zugzone des Pedalarms angeordnet ist, wenn dieser durch die Betätigungskraft nach unten gedrückt wird.

Vorteilhaft können die Kraftsensormittel aus einem Kraftsensor bestehen.

Als Kraftsensoren können dabei alle nach dem Stand der Technik bekannten Sensoren eingesetzt werden, die zwischen zwei Abstützpunkten eine anliegende Kraft erfassen können. Die Kraftsensoren können von Herstellern bereits vorkonfiguriert geliefert werden, so dass bei der Montage eine Einstellung nicht erforderlich ist. Dabei kann eine Kraftmessung bereits mit einem minimalen Weg von ca. 0,5 bis 5 mm erfolgen. Auch ist die beaufschlagte Fußkraft der mechanischen Bremse dadurch bekannt, was eine optimale Auslegung auch beim Lösen der mechanischen Bremse ermöglicht.

In einer Weiterbildung der mobilen Arbeitsmaschine ist die Pedalplatte gegenüber einem Pedalarm bewegliche gelagert.

Über die in beschränktem Maß mögliche relative Bewegung der Pedalplatte gegenüber dem Pedalarm mit zunehmender Betätigungskraft können die Kraftsensormittel zuverlässiger und genauer die Betätigungskraft erfassen.

Die Pedalplatte kann durch eine Vorspannfeder vorgespannt sein.

Dadurch ergibt sich eine im Wesentlichen lineare Zuordnung der Betätigungskraft zu der in beschränktem Maße möglichen Relativbewegung der Pedalplatte gegenüber dem Pedalarm. Auch wird dadurch eine Geräuschbildung verhindert und ein definierter Messbeginn sichergestellt.

Die Pedalplatte kann durch ein Drehgelenk mit dem Pedalarm verbunden sein.

Dadurch wird auf einfache sowie kostengünstige Art und Weise eine relative Bewegbarkeit bei gleichzeitig sicherer Führung der Pedalplatte gegenüber dem Pedalarm ermöglicht.

Die Drehachse des Drehgelenks kann mit einer Drehgelenkachse des Pedalarms zusammenfallen.

Ein Fußpedal ist zumeist als ein Hebelarm ausgeführt, der um eine Drehgelenkachse beweglich ist. Wenn die Drehachse zugleich dazu dient, die Pedalplatte gegenüber dem Pedalarm zu lagern, ergeben sich Vorteile hinsichtlich des Bauraums.

In einer vorteilhaften Weiterbildung der mobilen Arbeitsmaschine wirkt die Pedalplatte auf den Kraftsensor, der so aufgebaut ist, dass die Kraft über einen Druckkolben und eine Druckflüssigkeit auf einen Drucksensor einwirkt.

Bei diesem Aufbau des Kraftsensors lässt sich über den Druck in einer Druckflüssigkeit die auf die Pedalplatte ausgeübte Betätigungskraft mittels eines Drucksensors sehr gut bestimmen. Insbesondere kann durch eine Querschnittsanpassung des Druckkolbens eine Einstellung auf verschiedene zu erfassende Bereiche der Betätigungskraft erfolgen.

In einer günstigen Ausführungsform der mobilen Arbeitsmaschine wird auf den Kraftsensor über einen geführten Stößel die Betätigungskraft geleitet.

Dies ergibt eine einfache und zuverlässige, dabei jedoch ausreichend genaue Ausführungsform, bei der der zusätzliche Aufwand einer Druckflüssigkeit als Übertragungselement vermieden werden kann.

Der Kraftsensor kann eine Membran mit auf der Rückseite angeordneten Dehnmessstreifen aufweisen. Durch den Stößel wird die Kraft auf die Membran übertragen, wodurch sich diese verformt. Dabei kann sich die Membran ringförmig auf der Pedalplatte oder dem Pedalarm über ein entsprechendes Gehäuse abstützen. Vorteilhaft kann der Kraftsensor mit der Membran und dem Stößel als ein Bauteil hergestellt werden. In Funktion wird dann ein definierter Kraftanteil der Fußkraft von der Pedalplatte durch den Kraftsensor in den Pedalarm geleitet.

Der Kraftsensor kann einen Biegebalken, insbesondere mit runder Form, aufweisen.

Eine solche Ausführungsform bietet Vorteile hinsichtlich der Abdichtung gegen Staub und Nässe.

Vorteilhaft ist die mobile Arbeitsmaschine ein Flurförderzeug, insbesondere ein Gabelstapler.

Insbesondere bei elektrischen Gabelstapiern, wie Gegengewichtsgabelstaplern oder Schubmaststaplern, als Beispiel für Flurförderzeuge, ist die vorliegende Erfindung besonders vorteilhaft. Gabelstapler weisen ein relativ hohes Gewicht und hohe Zuladungen auf und fahren in einem niedrigen Geschwindigkeitsbereich. Gleichzeitig soll jedoch ein Beschleunigen sehr rasch erfolgen, weshalb elektrische Fahrantriebsmotoren relativ groß dimensioniert ausgelegt sind. Dies ermöglicht umgekehrt auch eine leistungsfähige elektrische Zusatzbremse über die Fahrantriebsmotoren, die oftmals zugleich erwünscht ist, um im rekuperativen Bremsbetrieb Energie zurückzugewinnen und wieder in der Traktionsbatterie oder einem elektrischen Kurzzeitspeicher zu speichern. Daher ist bei dieser Art von mobilen Arbeitsmaschinen eine bevorzugte Ansteuerung der elektrischen Zusatzbremse neben einer mechanischen Bremse zur Erreichung der erforderlichen Bremsleistung auch bei hoher Zuladung besonders vorteilhaft.

Da bevorzugt über die elektrische Zusatzbremse gebremst werden soll, die verschleißfrei ist, kann frühestmöglich ein Einsetzen der elektrischen Zusatzbremse erfolgen. Dabei wird ein Schwellenwert für das Steuersignal entsprechend der erfassten Betätigungskraft so ausgelegt, dass ein unbeabsichtigtes Auslösen der elektrischen Zusatzbremse sicher vermieden wird, wenn durch Erschütterungen des Fahrzeugs beim Fahrbetrieb die Trägheitsmomente insbesondere der Pedalplatte wirksam werden. Als ein optimaler Wert ist dabei ein Wert für die durch das Steuersignal erfasste Betätigungskraft von 10 N anzustreben. Dies ermöglicht auch im Rahmen von Sicherheitsfunktionen beispielsweise einen auf das Pedal nur gesetzten Fuß bereits zu erkennen. Ganz allgemein kann dadurch eine Erkennung einer Betätigung des Fußpedals an sich erfolgen und zum Zu- bzw. Abschalten weiterer Funktionen wie beispielsweise einer Kriechfunktion für ein Pedal eingesetzt werden. Es sind auch Ausführungen von Fahrzeugen denkbar, insbesondere Flurförderzeugen, die nur zwei Pedale aufweisen, die jeweils gleichzeitig als Bremsbetätigungsvorrichtung wie auch als Fahrpedal dienen, indem für jede Fahrtrichtung ein Pedal vorgesehen ist und durch Betätigen der Gegenfahrtrichtung ein Abbremsen mit nachfolgendem Beschleunigen in der Gegenrichtung erfolgt. Bei diesen Ausführungsformen kann durch die niedrige erste Schwelle auch ein fahrtrichtungsabhängiges Einschalten von weiteren Funktionen, insbesondere Signalfunktionen wie auch der Beleuchtung erfolgen.

Vorteilhaft wird eine maximale elektrische Verzögerung angesteuert, wenn die mechanische Bremse als Reibungsbremse ca. 10 % ihres maximalen Bremsmoments aufbringt.

Weitere Vorteile und Einzelheiten der Erfindung werden anhand des in den schematischen Figuren dargestellten Ausführungsbeispiels näher erläutert. Hierbei zeigt
- Fig. 1: eine als Flurförderzeug ausgebildete mobile Arbeitsmaschine mit einer Bremsbetätigungsvorrichtung,
- Fig. 2: eine seitliche Schnittansicht eines Fußpedals als Bremsbetätigungsvorrichtung,
- Fig. 3: ein weiteres Ausführungsbeispiel des Fußpedals als Bremsbetätigungsvorrichtung in einer seitlichen Schnittansicht.
- Fig. 4: ein weiteres Ausführungsbeispiel des Fußpedals als Bremsbetätigungsvorrichtung in einer Sprengbildansicht und
- Fig. 5: das Fußpedal des Ausführungsbeispiels der Fig. 4 in einer Schnittansicht.

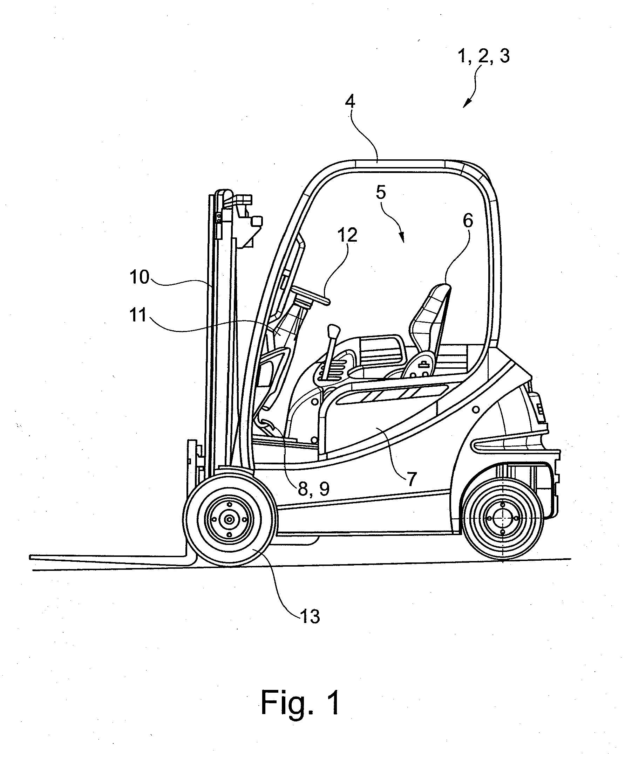

In der Fig. 1 ist ein als Gegengewichtsgabelstapler 1 ausgebildetes Flurförderzeug 2, beispielsweise ein batterie-elektrisch betriebener Gegengewichtsgabelstaplers 1, als Beispiel einer mobilen Arbeitsmaschine 3 dargestellt. Innerhalb eines Fahrerschutzdaches 4 ist ein Fahrerarbeitsplatz 5 ausgebildet, der beispielsweise einen Fahrersitz 6 umfasst. Der Fahrersitz 6 ist auf einer Batterie- bzw. Motorhaube 7 angeordnet und vor dem Fahrersitz im Fußbereich ist ein Fußpedal 8 als Bremsbetätigungsvorrichtung 9 angeordnet. Im vorderen, einem Hubmast 10 zugewandten Bereich des Fahrerschutzdaches 4, dem sogenannten Vorderaufbau, ist eine Bedienkonsole 11, beispielsweise ein als Cockpit ausgebildetes Armaturenbrett, als weiterer Bestandteil des Fahrerarbeitsplatzes 5 angeordnet. An der Bedienkonsole 11 befindet sich ein Lenkrad 12. Die mechanische Bremse wirkt auf durch elektrische Fahrmotoren angetriebenen Vorderräder 13 des Gabelstaplers 1. Die elektrischen Fahrmotoren können dabei in einem Generatorbetrieb als elektrische Zusatzbremse wirken, wobei es je nach Ausführungsform des Gabelstaplers 1 möglich ist, dass die elektrische Zusatzbremse in einem rekuperativen Betrieb elektrische Energie in die Batterie zurückspeist.

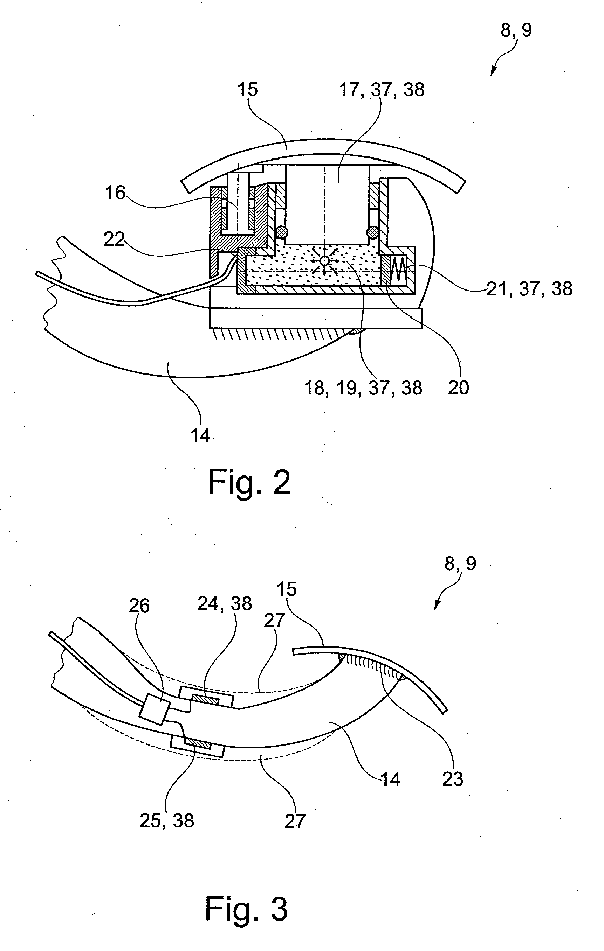

Die Fig. 2 zeigt eine seitliche Schnittansicht des Fußpedals 8 der Fig. 1 als Bremsbetätigungsvorrichtung 9. An einem Pedalarm 14 ist eine Pedalplatte 15 beweglich gelagert, wobei sie durch einen Führungsstift 16 sowie einen Druckkolben 17 geführt wird. Der Druckkolben 17 überträgt die Betätigungskraft in einem Druckraum 18 auf eine Druckflüssigkeit 19. Durch einen Vorspannkolben 20 mit einer Vorspannfeder 21 wird sowohl die Pedalplatte 15 vorgespannt und die Druckflüssigkeit 19 unter Spannung gehalten. Ein Drucksensor 22 erfasst den Druck der Druckflüssigkeit 19. Der Druckkolben 17 mit der Druckflüssigkeit 19 in dem Druckrahmen 18 sowie der Drucksensor 22 bilden einen Kraftsensor 37 der als Kraftsensormittel 38 dient.

Wenn bei der Bedienung der Bremsbetätigungsvorrichtung 9 die Pedalplatte 15 mit dem Druckkolben 17 nach unten gedrückt wird, so wird entsprechend der Fläche des Druckkolbens 17 der Druck der Druckflüssigkeit 19 erhöht, der durch den Drucksensor 22 erfasst wird. Sobald die Pedalplatte 15 losgelassen wird, so wird diese durch die Vorspannfeder 21 und den Vorspannkolben 20 über die Druckflüssigkeit 19 wieder in ihre ursprüngliche Ausgangslage nach oben gedrückt.

Die Fig. 3 zeigt ein weiteres Ausführungsbeispiel eines Fußpedals 8 als Bremsbetätigungsvorrichtung 9 in einer seitlichen Schnittansicht. Funktional den Bauelementen des bisherigen Ausführungsbeispiels entsprechende Elemente sind mit den gleichen Bezugszeichen versehen. Mit dem Pedalarm 14 ist hier die Pedalplatte 14 durch eine Schweißnaht 23 fest verbunden. An dem Pedalarm 14 ist ein oberer Dehnmessstreifen 24 sowie ein unterer Dehnmessstreifen 25 angeordnet, die über eine elektrische Auswerteeinheit 26 ein Steuersignal liefern, durch das die Betätigungskraft erfasst wird, die auf die Pedalplatte 15 ausgeübt wird. Bei dieser Ausführungsform bildet der obere Dehnmessstreifen 24 zusammen mit dem unteren Dehnmessstreifen 25 die Kraftsensormittel 38.

Da der Pedalarm 14 im Bereich der Dehnmessstreifen 24,25 etwas geschwächt ist, wie durch die Normalkonturlinie 27 angedeutet, kann die Verformung des Pedalarms 14 bei einer Belastung der Pedalplatte 15 durch die Dehnmessstreifen 24,25 leichter erfasst werden. Dabei befindet sich der obere Dehnmessstreifen 24 in einer Zugzone und der untere Dehnmessstreifen 25 in einer Druckzone in Bezug auf eine Betätigungsrichtung des Fußpedals bei Belastung. Durch die Benutzung von Dehnmessstreifen 24,25 ergibt sich eine einfache Ausführungsform mit wenigen Einzelteilen, wobei das Fußpedal 8 überdies gegenüber der mechanischen Belastung besonders stabil ist und keine zusätzlichen beweglichen Freiheitsgrade aufweisen muss.

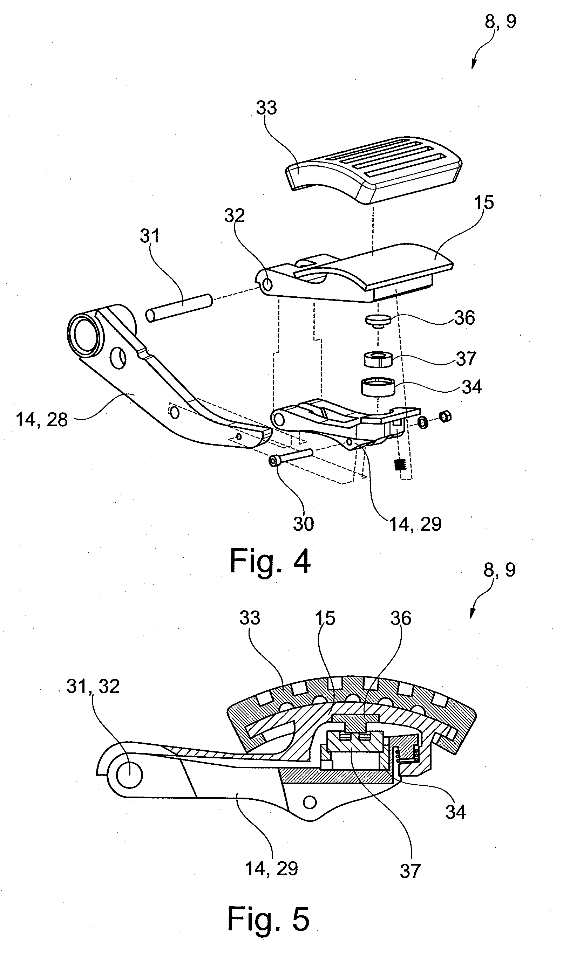

Die Fig. 4 zeigt ein weiteres Ausführungsbeispiel eines Fußpedals 8 als Bremsbetätigungsvorrichtung 9 in einer Sprengbildansicht. Der Pedalarm 14 ist aus einem Hebelarm 28 sowie einem Pedalträger 29 aufgebaut, die über eine Schraube 30 verbunden sind. Ein Bolzen 31 dient als Drehachse eines Drehgelenks 32, über das die Pedalplatte 15 beweglich mit dem Pedalarm 14 verbunden ist. Ein Pedalgummi 33 ist als Abrutschschutz auf der Pedalplatte 15 angeordnet. Zwischen Pedalplatte 15 und Pedalträger 29 ist auf einem Tragelement 34 ein Kraftsensor 37 angeordnet, bei dem die Betätigungskraft über einen Stößel 36 auf eine Membran geleitet wird.

Vorteilhaft ergibt sich bei diesem Ausführungsbeispiel ein sehr einfacher Aufbau, bei dem keine Druckübertragungsflüssigkeit erforderlich ist. Durch die Einleitung der Betätigungskraft über den Stößel 36 auf eine sich durch den Druck verformende und dabei an Dehnmessstreifen die Kräfte erfassende Membran des Kraftsensors 37 kann die Betätigungskraft bereits erfasst werden, auch ohne dass eine Kraftübertragung über eine Druckflüssigkeit erfolgen muss.

Die Fig. 5 zeigt das Fußpedal 8 des Ausführungsbeispiels der Fig. 4 in einer Schnittansicht. Dargestellt ist der Pedalträger 29 mit dem Bolzen 31 des Drehgelenks 32 sowie die Pedalplatte 15 mit dem Pedalgummi 33. Der Stößel 36 überträgt die Betätigungskraft auf den Kraftsensor 37, der in dem Tragelement 34 auf dem Pedalträger 29 gelagert ist.

Vorteilhaft kann durch alle zuvor beschriebenen Ausführungsformen von Bremsbetätigungsvorrichtungen 9 unabhängig von Veränderungen des Stellwegs der Bremsbetätigungsvorrichtung 9 oder einer Notwendigkeit einer Kalibrierung eine elektrische Zusatzbremse der mobilen Arbeitsmaschine genau und zuverlässig angesteuert werden.

Die Merkmale aller zuvor jeweils am Beispiel eines Fußpedals 8 geschilderten Ausführungsbeispiele können grundsätzlich auch bei einer Bremsbetätigungsvorrichtung für einen Handbetrieb eingesetzt werden, wenn anstatt einer Pedalplatte eine Betätigungsfläche für die Hand vorgesehen wird bei ansonsten unveränderten Merkmalen. Die konkreten Ausführungsformen der Dehnmessstreifen 24,25 sowie der beiden geschilderten Varianten der Kraftsensoren 37 mit Drucksensor 22 oder einem Stößel 36 können unabhängig von einem Fußpedal 8 auch bei anderen Bremsbetätigungsvorrichtungen, insbesondere einer solchen für einen Handbetrieb eingesetzt werden.

## Patentansprüche

1. Mobile Arbeitsmaschine mit einer mechanischen Bremse sowie einer elektrischen Zusatzbremse, die über eine Bremsbetätigungsvorrichtung (9) bedient werden, wobei eine Bremskraft und/oder ein Bremssignal für die mechanische Bremse durch eine von einer Person ausgeübte Betätigungskraft erzeugt wird,
**dadurch gekennzeichnet,**
**dass** Kraftsensormittel (38) die auf eine Bedienfläche der Bremsbetätigungsvorrichtung (9) ausgeübte Betätigungskraft erfassen und durch ein von der Betätigungskraft abhängiges Steuersignal die elektrische Zusatzbremse angesteuert wird.

2. Mobile Arbeitsmaschine nach Anspruch 1,
**dadurch gekennzeichnet,**
**dass** durch das Steuersignal die Betätigungskraft kontinuierlich erfasst wird.

3. Mobile Arbeitsmaschine nach Anspruch 1 oder 2,
**dadurch gekennzeichnet,**
**dass** die Bremskraft und/oder das Bremssignal über einen Stellweg gegen eine rückstellende Kraft erzeugt wird.

4. Mobile Arbeitsmaschine nach einem der Ansprüche 1 bis 3,
**dadurch gekennzeichnet,**
**dass** die Bremsbetätigungsvorrichtung (9) ein Fußpedal (8) und die Bedienfläche eine Pedalplatte (15) ist.

5. Mobile Arbeitsmaschine nach Anspruch 4,
**dadurch gekennzeichnet,**
**dass** die Pedalplatte (15) an einem Pedalarm (14) angeordnet ist und die Kraftsensormittel (38) aus mindestens einem Dehnmesstreifen (24,25) bestehen, der die Betätigungskraft über die Verformung des Pedalarms (14) erfasst.

6. Mobile Arbeitsmaschine nach Anspruch 5,
**dadurch gekennzeichnet,**
**dass** je auf der Ober- und der Unterseite des Pedalarms (14) ein Dehnmessstreifen (24,25) angeordnet ist.

7. Mobile Arbeitsmaschine nach Anspruch 4,
**dadurch gekennzeichnet,**
**dass** die Kraftsensormittel (38) aus einem Kraftsensor (37) bestehen.

8. Mobile Arbeitsmaschine nach Anspruch 7,
**dadurch gekennzeichnet,**
**dass** die Pedalplatte (15) gegenüber einem Pedalarm (14) bewegliche gelagert ist.

9. Mobile Arbeitsmaschine nach Anspruch 8,
**dadurch gekennzeichnet,**
**dass** die Pedalplatte (15) durch eine Vorspannfeder (21) vorgespannt ist.

10. Mobile Arbeitsmaschine nach Anspruch 8 oder 9,
**dadurch gekennzeichnet,**
**dass** die Pedalplatte (15) durch ein Drehgelenk (32) mit dem Pedalarm (14) verbunden ist.

11. Mobile Arbeitsmaschine nach Anspruch 10,
**dadurch gekennzeichnet,**
**dass** die Drehachse des Drehgelenks mit einer Drehgelenkachse des Pedalarms zusammenfällt.

12. Mobile Arbeitsmaschine nach einem der Ansprüche 7 bis 11,
**dadurch gekennzeichnet,**
**dass** die Pedalplatte (15) auf den Kraftsensor (37) wirkt, der so aufgebaut ist, dass die Kraft über einen Druckkolben (17) und eine Druckflüssigkeit (19) auf einen Drucksensor (22) einwirkt.

13. Mobile Arbeitsmaschine nach einem der Ansprüche 7 bis 12,
**dadurch gekennzeichnet,**
**dass** auf den Kraftsensor (37) über einen geführten Stößel (36) die Betätigungskraft geleitet wird.

14. Mobile Arbeitsmaschine nach Anspruch 13,
**dadurch gekennzeichnet,**
**dass** der Kraftsensor (37) eine Membran mit auf der Rückseite angeordneten Dehnmessstreifen aufweist.

15. Mobile Arbeitsmaschine nach Anspruch 13,
**dadurch gekennzeichnet,**
**dass** der Kraftsensor einen Biegebalken, insbesondere mit runder Form, aufweist.

16. Mobile Arbeitsmaschine nach einem der Ansprüche 1 bis 15,
**dadurch gekennzeichnet,**
**dass** die mobile Arbeitsmaschine (3) ein Flurförderzeug (2) ist, insbesondere ein Gabelstapler (1).
